(19) Europäisches Patentamt / European Patent Office / Office européen des brevets

(11) **EP 2 794 234 B1**

(12) **FASCICULE DE BREVET EUROPEEN**

(45) Date de publication et mention de la délivrance du brevet:
**18.09.2019 Bulletin 2019/38**

(21) Numéro de dépôt: **12819100.4**

(22) Date de dépôt: **19.12.2012**

(51) Int Cl.:
**B29C 49/48** *(2006.01)* **B29C 35/02** *(2006.01)*
**B29C 49/38** *(2006.01)* **B29C 49/64** *(2006.01)*
**B29C 49/78** *(2006.01)*

(86) Numéro de dépôt international:
**PCT/FR2012/052988**

(87) Numéro de publication internationale:
**WO 2013/093335 (27.06.2013 Gazette 2013/26)**

(54) **MOULE POUR LE FORMAGE DE RÉCIPIENTS, ÉQUIPÉ D'UN SYSTÈME DE CHAUFFE ÉLECTRIQUE COMPRENANT UN JEU D'ÉLÉMENTS RÉSISTIFS DISTINCTS**

FORM ZUR HERSTELLUNG VON BEHÄLTERN MIT EINEM ELEKTRISCHEN HEIZUNGSSYSTEM MIT EINER REIHE VON SEPARATEN WIDERSTANDSELEMENTEN

MOULD FOR FORMING CONTAINERS, EQUIPPED WITH AN ELECTRIC HEATING SYSTEM COMPRISING A SET OF DISTINCT RESISTIVE ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2011 FR 1162419**

(43) Date de publication de la demande:
**29.10.2014 Bulletin 2014/44**

(73) Titulaire: **Sidel Participations**
**76930 Octeville-sur-Mer (FR)**

(72) Inventeurs:
• **LE PECHOUR, Anthony**
**F-76930 Octeville Sur Mer (FR)**

• **FOUET, Laurent**
**F-76930 Octeville Sur Mer (FR)**

(74) Mandataire: **Grassin d'Alphonse, Emmanuel Jean Marie et al**
**Sidel Participations**
**Avenue de la Patrouille de France**
**76930 Octeville-sur-mer (FR)**

(56) Documents cités:

| | |
|---|---|
| WO-A1-94/06617 | WO-A2-2011/091780 |
| DE-A1-102009 022 374 | JP-A- S5 789 929 |
| US-A- 2 582 260 | US-A- 4 871 507 |

**Description**

L'invention a trait à la fabrication des récipients par soufflage ou étirage soufflage, à partir d'ébauches en matière plastique telle que PET (polyéthylène téréphtalate).

La technique de soufflage d'un récipient comprend, en premier lieu, une opération de chauffe d'une ébauche (qu'il s'agisse d'une préforme ou d'un récipient intermédiaire ayant subi une première opération de soufflage à partir d'une préforme) à une température prédéterminée, supérieure à la température de transition vitreuse de la matière constitutive de l'ébauche.

En deuxième lieu, l'ébauche ainsi chauffée est introduite dans un moule ayant une paroi délimitant une cavité à l'empreinte du récipient, et l'on réalise une opération de soufflage de l'ébauche en y injectant un fluide (généralement de l'air) sous pression (cette pression étant généralement comprise entre 20 et 40 bars).

Une opération d'étirage peut être prévue, consistant, pendant le soufflage, à étirer l'ébauche au moyen d'une tige coulissante assurant le maintien du récipient dans l'axe du moule.

Certains récipients doivent être résistants à la chaleur pour permettre leur remplissage à chaud. On dénomme « HR » (acronyme de l'anglais *Heat Resistant*) ces récipients. Pour accroître la résistance de la matière aux déformations induites par l'élévation de température lors du remplissage, une technique connue consiste à accroître de manière thermique la cristallinité de la matière. En pratique, la paroi du moule est chauffée à une température relativement élevée (supérieure à 100°C, et généralement de l'ordre de 130°C à 160°C). En fin de soufflage, le récipient est, pendant une durée prédéterminée, maintenu en contact avec la paroi du moule. Le transfert de chaleur entre la paroi et le récipient provoque un accroissement de la cristallinité de la matière. Cette technique est appelée thermofixation (*heat set* en anglais).

On connaît principalement deux techniques de chauffe du moule permettant d'effectuer une thermofixation des récipients.

Une première technique consiste à faire circuler dans la paroi du moule un fluide (notamment de l'eau ou de l'huile) préalablement chauffé. Cette technique éprouvée est très répandue. Elle présente cependant un certain nombre d'inconvénients. Premièrement, compte tenu des échanges thermiques importants ayant lieu entre la paroi du moule et les récipients, elle nécessite un débit (et donc une réserve) de fluide important. Deuxièmement, la circulation du fluide dans le moule nécessite le percement de canaux complexes dans la paroi du moule.

Une deuxième technique consiste à chauffer le moule au moyen d'une résistance électrique, la chaleur fournie au moule étant dissipée par effet Joule. On connaît ainsi du brevet européen EP 1 753 597 ou du document WO2011/091780 un support de moule sur lequel est fixée, à une interface avec un moule à l'empreinte du récipient, une résistance électrique en serpentin, munie de sections transversales situées au voisinage des extrémités du moule.

Cette technique, peu répandue à ce jour, n'est pas non plus sans inconvénients. Premièrement, compte tenu de la disposition de la résistance, à l'interface entre le moule et son support, une partie importante de la chaleur dissipée par effet Joule est simplement perdue, ce qui diminue le rendement énergétique de la chauffe. Deuxièmement, la forme en serpentin de la résistance nécessite un usinage complexe du support de moule. Cet usinage est d'autant plus complexe que les tolérances qui lui sont associées sont faibles, puisqu'il apparaît souhaitable, pour minimiser les fuites, de maximiser la surface de contact entre la résistance et le support. Plus généralement, la technique décrite dans le brevet européen précité ne permet pas de régler de manière fiable la température du moule.

Par ailleurs, le document JPS5789929 décrit un procédé de chauffe d'une préforme.

Un premier objectif est d'améliorer le rendement énergétique de la chauffe électrique d'un moule.

Un deuxième objectif est de simplifier la fabrication d'un moule muni d'un système de chauffe électrique.

Un troisième objectif est de permettre une meilleure régulation de la température du moule.

A cet effet, il est proposé, en premier lieu, un moule selon la revendication 1. Un tel moule, qui intègre le système de chauffe, offre notamment un rendement énergétique supérieur aux moules à chauffe électrique connus. Il permet en outre de réaliser un chauffage du récipient par zones superposées, au bénéfice de la précision de chauffe et, in fine, de la qualité (et des performances) du récipient.

Il est proposé, en deuxième lieu, une unité de formage de récipients à partir de préformes en matière plastique, qui comprend au moins un tel moule, ou une pluralité de tels moules montés sur un carrousel commun.

Diverses caractéristiques supplémentaires peuvent être prévues, seules ou en combinaison :

- les éléments résistifs d'un même jeu présentent des résistances intrinsèques différentes ;
- chaque élément résistif est de forme générale cylindrique, et s'étend sensiblement parallèlement à l'axe central ;
- chaque jeu d'éléments résistifs se présente sous forme d'un élément radiant unitaire ;
- chaque élément radiant se présente sous forme d'un crayon cylindrique inséré dans un trou complémentaire formé dans la coquille ;
- chaque élément résistif est de forme générale torique de révolution autour de l'axe central ;
- les éléments résistifs d'un même jeu sont montés en série sur un circuit électrique commun ;
- les éléments résistifs d'un même jeu sont montés en parallèle sur un circuit électrique commun ;

- le circuit électrique est piloté par une unité de contrôle ;

- l'unité de contrôle est reliée à un capteur thermique (sonde de température montée dans le moule, ou caméra thermique montée en sortie du moule) configuré pour effectuer une prise de température au niveau de l'une au moins des zones de la cavité situées au droit des éléments résistifs ;

- chaque élément résistif est monté sur un circuit électrique indépendant.

D'autres objets et avantages de l'invention apparaîtront à la lumière de la description d'un mode préféré de réalisation, faite ci-après en référence aux dessins annexés dans lesquels :

- la figure 1 est une vue en perspective montrant un moule assemblé pour le formage de récipients à partir d'ébauches ;

- la figure 2 est une vue en coupe transversale du moule de la figure 1 ;

- la figure 3 est une vue partielle en perspective éclatée montrant une coquille du moule des figures 1 et 2, illustrant la structure du système de chauffe électrique du moule ;

- la figure 4 est une vue en coupe du moule de la figure 2, suivant le plan de coupe IV-IV;

- la figure 5 est une vue en perspective montrant un jeu d'éléments résistifs selon une variante de réalisation dans laquelle chaque élément résistif est de forme torique ;

- la figure 6 est un schéma illustrant, selon un premier mode de réalisation, la configuration électrique du système de chauffe, dans laquelle les résistors d'un même jeu sont montés en série ;

- la figure 7 est un schéma illustrant, selon un deuxième mode de réalisation, la configuration électrique du système de chauffe, dans laquelle les résistors d'un même jeu sont montés en parallèle ;

- la figure 8 est un diagramme illustrant les courbes des températures de chauffe correspondant à trois résistors superposés d'un même jeu, montés en série ou en parallèle, en fonction respectivement du courant circulant dans le circuit ou de la tension aux bornes de celui-ci ;

- la figure 9 est un schéma illustrant, selon un troisième mode de réalisation, la configuration électrique du système de chauffe, dans laquelle les résistors d'un même jeu sont connectés à des circuits électriques distincts.

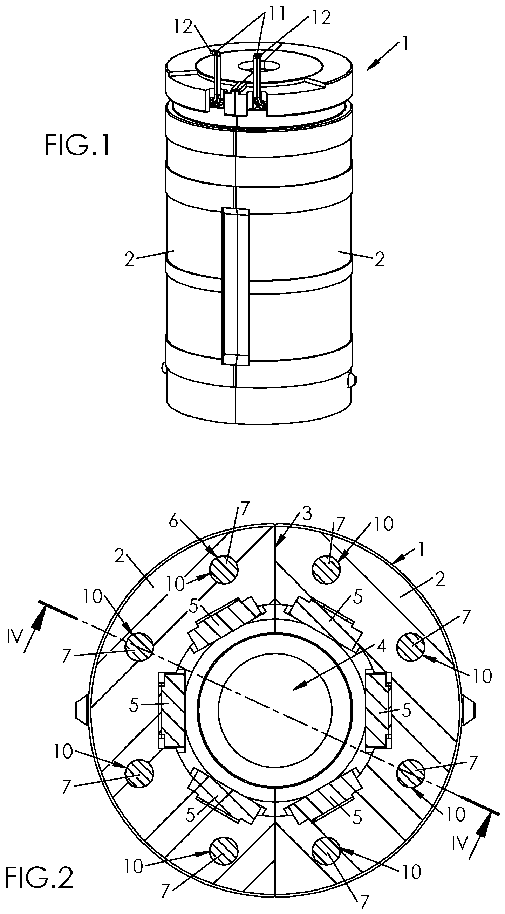

Sur la figure 1 est représenté un moule 1 pour le formage de récipients à partir d'ébauches (il s'agit généralement de préformes) en matière plastique. Ce moule 1 est destiné à être intégré à une unité de formage des récipients, qui comprend par exemple un carrousel à la périphérie duquel sont montés plusieurs moules 1.

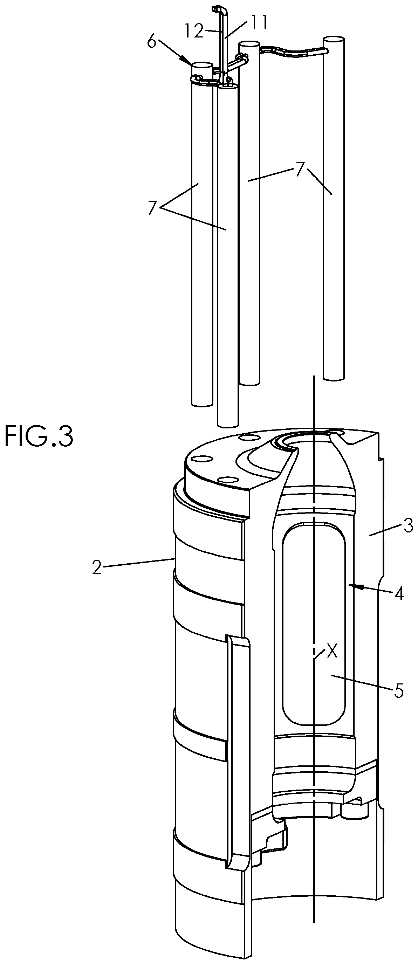

Ce moule 1 est du type portefeuille et comprend deux demi-moules 2 (également appelés coquilles) fixés de manière amovible dans deux porte-coquilles respectifs (non représentés), montés articulés en rotation l'un par rapport à l'autre autour d'une charnière commune. La figure 3 montre une coquille 2 seule, représentée en éclaté.

Chaque coquille 2 est réalisée de manière monobloc dans un matériau métallique tel qu'un acier ou un alliage d'aluminium. Dans la coquille 2 est formée en creux, à partir d'une face 3 plane formant une interface entre les coquilles 2, une cavité 4 à l'empreinte d'un récipient final à former, qui s'étend autour d'un axe **X** central de symétrie.

Les récipients à former sont du type HR, c'est-à-dire qu'ils présentent une bonne résistance mécanique à la déformation lors d'un remplissage à chaud. Cette résistance est conférée à chaque récipient par un accroissement de son taux de cristallinité par voie thermique, ce processus appelé thermofixation étant rendu possible par une régulation de la température du moule **1** à une température élevée (supérieure à 100°C, et de préférence comprise entre 130°C et 160°C).

Selon un mode particulier de réalisation, le récipient final présente des panneaux destinés à absorber les déformations lors du remplissage. Ces panneaux sont par exemple formés par une série d'inserts **5** montés dans la cavité **4** de manière amovible, dans des logements prévus à cet effet.

En pratique, la thermofixation consiste à maintenir, à la fin de son formage, le récipient plaqué contre la paroi de la cavité **4** pendant une durée prédéterminée.

Afin de maintenir la température des coquilles **2** à une température élevée, le moule **1** comprend un système **6** de chauffe électrique de chaque coquille **2.**

Ce système **6** de chauffe comprend, pour chaque coquille **2,** au moins un jeu **7** d'éléments résistifs ou résistors **8.i** (où i est un entier compris entre 1 et N, N étant un entier strictement supérieur à 1, N étant égal à 3 dans le mode de réalisation illustré) distincts, superposés sensiblement parallèlement à l'axe **X** central et de topologie similaire, localisés en regard de zones **9.i** correspondantes distinctes, adjacentes et superposées de la cavité **4**. La topologie de deux éléments est dite similaire lorsqu'ils présentent les mêmes propriétés géométriques. Ainsi, deux cylindres de révolution sont réputés de topologie similaire, de même que deux tores de révolution. En revanche, un cylindre de révolution et un tore de révolution présentent des topologies dissemblables.

Le système **6** de chauffe est agencé pour dissiper par effet Joule une énergie thermique différente au niveau de chaque résistor **8.i** d'un même jeu **7,** afin de chauffer et réguler en température les zones **9.i** adjacentes superposées à des températures différentes.

Chaque résistor **8.i** comprend un conducteur électrique sous forme d'un enroulement hélicoïdal (ou solénoïde) autour d'une courbe guide C, noyé dans un isolant diélectrique réalisé dans un matériau réfractaire offrant une bonne conductivité thermique tout en ayant une grande résistance électrique. De manière classique, le conducteur peut être réalisé dans un alliage de nickel et de chrome.

Selon un mode de réalisation préféré, illustré sur les figures 2 à 4, la topologie de chaque résistor **8.i** est droite, c'est-à-dire que la courbe guide **C** du résistor **8.i** est un segment de droite, le résistor étant par conséquent, à grande échelle (c'est-à-dire à l'échelle du moule), cylindrique de révolution.

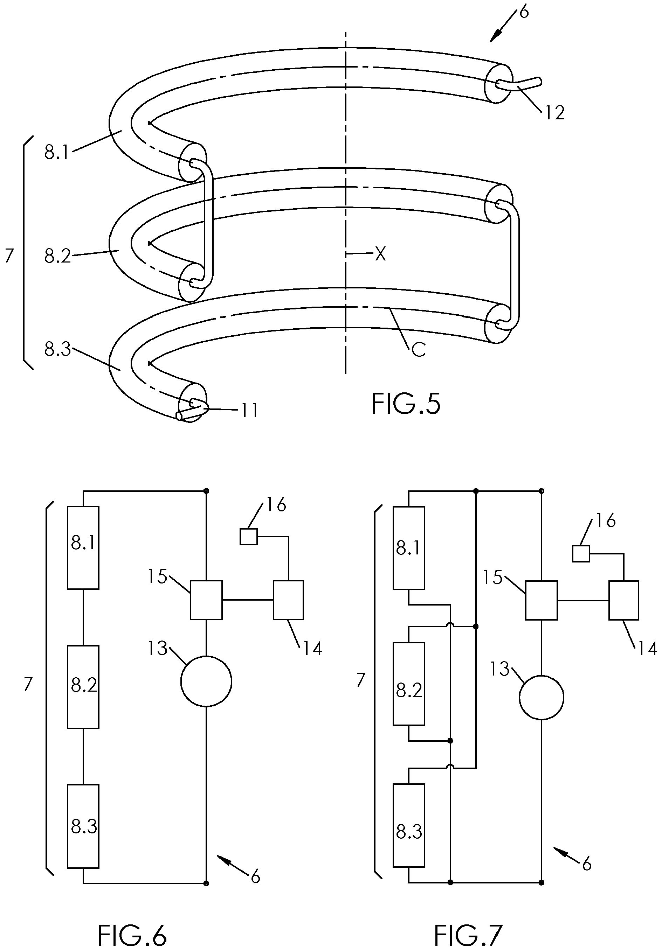

Dans une variante illustrée sur la figure 5, la courbe guide **C** est un arc de cercle, chaque résistor **8.i** étant par conséquent torique à grande échelle.

Par convention, on nomme résistance intrinsèque, notée $R_i$, la résistance électrique de chaque résistor **8.i,** mesurée par unité de longueur d'arc de sa courbe guide C. La résistance intrinsèque $R_i$ est fournie par la formule suivante :

$$R_i = \rho \frac{l_i}{A}$$

où :

$R_i$ est la résistance électrique du résistor **8.i,** mesurée par unité de longueur d'arc de la courbe guide, en ohm [$\Omega$];

$\rho$ est la résistivité du matériau, mesurée en ohm-mètre [$\Omega \cdot m$]

$l_i$ est la longueur développée de l'enroulement hélicoïdal, mesurée sur une unité de longueur d'arc de la courbe guide **C** du résistor **8.i,** exprimée en mètres [m] ;

A est la section du résistor **8.i,** exprimée en mètres carrés [$m^2$].

Les résistors **8.i** superposés d'un même jeu **7** présentent une topologie similaire (notamment cylindrique dans l'exemple des figures 2 à 4, ou torique dans l'exemple de la figure 5) tout en ayant de préférence des résistances électriques intrinsèques $R_i$ respectives différentes.

On a représenté sur les figures 2, 3 et 4 une configuration physique préférée, dans laquelle chaque résistor **8.i** est cylindrique, c'est-à-dire que la courbe guide **C** du conducteur est un segment de droite.

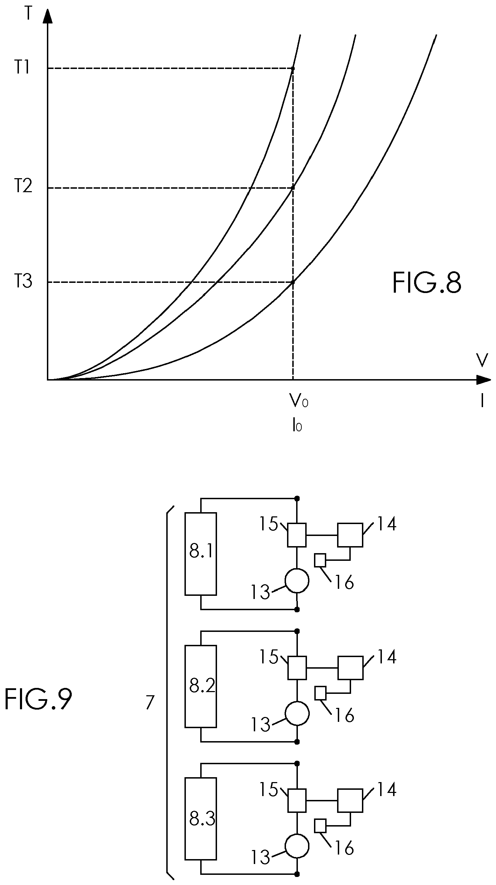

Comme cela est bien visible sur les figures, chaque jeu **7** constitue dans cette configuration un élément radiant unitaire sous forme d'un crayon cylindrique comprenant chacun plusieurs (trois en l'espèce) résistors **8.i** coaxiaux qui peuvent être montés sur un même circuit électrique, en série ou en parallèle comme illustré respectivement sur les figures 6 et 7, ou indépendamment sur des circuits électriques distincts, comme illustré sur la figure 9.

Chaque crayon **7** est monté dans un trou **10** cylindrique complémentaire formé dans la coquille **2** sur sensiblement toute la hauteur de celle-ci, parallèlement à l'axe **X** central de la cavité **4**. Comme on le voit sur la figure 2, les crayons **7,** en l'espèce au nombre de quatre, sont répartis circulairement de manière régulière à la périphérie de la coquille **2,** à distance sensiblement égale de l'axe **X** central.

Le trou **10** présente un diamètre légèrement supérieur au diamètre externe du crayon **7,** le jeu entre eux étant toutefois suffisamment faible (en fonction de ce que les tolérances de fabrication permettent) pour maximiser le contact entre le crayon **7** et la coquille **2** et ainsi limiter les fuites thermiques et améliorer le rendement énergétique du moule **1.**

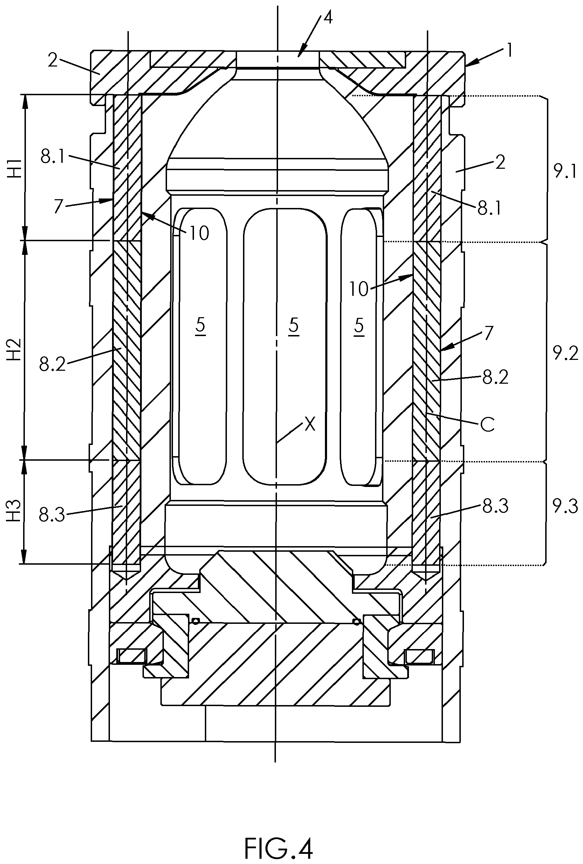

Comme illustré sur la figure 4, les résistors **8.i** au sein d'un même crayon **7** s'étendent sur des hauteurs respectives **Hi** qui peuvent être différentes et correspondent chacune à une zone **9.i** particulière de chauffe de la cavité **4.**

Ainsi, dans l'exemple illustré sur la figure 4, chaque crayon **7** comprend :

- un premier résistor **8.1,** de résistance intrinsèque notée $R_1$, qui s'étend sur une première hauteur **H1,** au niveau d'une zone **9.1** supérieure de chauffe correspondant à l'empreinte d'une épaule du récipient à former, à chauffer à une première température **T1** prédéterminée ;
- un deuxième résistor **8.1,** de résistance intrinsèque notée $R_2$, qui s'étend sur une deuxième hauteur **H2,** au niveau d'une zone intermédiaire **9.2** de chauffe correspondant à l'empreinte d'un corps du récipient à former, à chauffer à une deuxième température **T2** prédéterminée ;
- un troisième résistor **8.3,** de résistance intrinsèque notée $R_3$, qui s'étend sur une troisième hauteur **H3,** au niveau d'une zone **9.3** inférieure de chauffe correspondant à l'empreinte d'un fond du récipient à former, à chauffer à une troisième température **T3** prédéterminée.

Pour faire varier la température de la coquille **2** suivant la hauteur de celle-ci, on veille de préférence à ce que chaque résistor **8.i** présente une résistance électrique intrinsèque différente :

$$R_1 \neq R_2 \neq R_3$$

avec, de préférence :

$$R_1 \neq R_3$$

Concrètement, selon un mode particulier de réalisation, chaque crayon **7** comprend un conducteur électrique unique ayant plusieurs sections successives aboutées présentant des résistances intrinsèques différentes par unité de longueur d'arc de la courbe guide (rectiligne en l'espèce) et formant chacune un résistor **8.i** distinct. De la sorte, la puissance électrique dissipée par effet Joule et par unité de longueur par deux conducteurs voisins varie d'un conducteur à l'autre (c'est-à-dire d'un résistor **8.i** à l'autre). Il en découle que la température de chauffe est différente pour chaque zone **9.i** de la cavité **4.**

La variation de résistance intrinsèque dans chaque crayon **7** peut se faire, dans l'hypothèse où l'enroulement spiral est réalisé dans un matériau unique, par variation de densité de l'enroulement des conducteurs (c'est-à-dire par variation de la longueur développée du conducteur par unité de longueur de la courbe guide C), ou par variation de la section du conducteur.

Les résistors **8.1** d'un même crayon **7** peuvent être montés en série (comme illustré sur le schéma de principe de la figure 6) ou en parallèle (comme illustré sur le schéma de principe de la figure 7) sur un même circuit électrique comprenant un fil **11** conducteur aller et un fil **12** conducteur retour. Les fils **11, 12** sont de préférence raccordés à une borne électrique qui peut être intégrée à un bornier (non représenté). En variante, les résistors **8.1** peuvent être indépendants (comme illustré sur le schéma de principe de la figure 9) et intégrés à des circuits électriques indépendants. Dans ce cas, leurs résistances électriques intrinsèques $R_i$ peuvent être identiques, la variation de puissance d'un résistor à l'autre découlant d'une variation de l'intensité du courant ou de la tension qui les alimente.

Le (ou chaque) circuit électrique est alimenté en courant par un générateur **13.**

Afin de varier et réguler la puissance dissipée au niveau de chaque résistor **8.i,** le circuit électrique est relié à une unité **14** de contrôle avec interposition d'un gradateur **15** à commande par angle de phase ou, préférentiellement, par train d'onde. Dans ce cas le gradateur comprend un interrupteur assurant alternativement le passage et la coupure du courant issu du secteur sur des durées respectives prédéterminées. L'unité **14** de contrôle est programmée pour régler le rapport des durées de passage et de coupure.

Selon un mode préféré de réalisation, l'unité **14** de contrôle assure le réglage et la régulation de la puissance (via le gradateur **15**) par rétroaction, en fonction par exemple d'un paramètre de température, tel que la température au droit de l'une des zones **9.i** de la cavité **4,** mesurée au moyen d'un au moins un capteur **16** thermique tel qu'un thermocouple ou une sonde (pour une prise de température unique) ou une caméra thermique (pour une cartographie thermique) reliée à l'unité **16** de contrôle - et plus précisément au gradateur **15.**

Dans le montage électrique de la figure 6, les puissances électriques Pi dissipées par chaque résistor **8.i** sont toutes, suivant la loi d'Ohm, proportionnelles à la résistance $R_i$ et au carré de l'intensité du courant I circulant dans le circuit :

$$P_i = R_i \cdot I^2$$

Dans le montage électrique de la figure **7,** les puissances électriques $P_i$ dissipées par chaque résistor **8.i** sont toutes, suivant la loi d'Ohm, proportionnelles à l'inverse de la résistance $R_i$ et au carré de la tension V aux bornes du circuit :

$$P_i = \frac{V^2}{R_i}$$

Les températures moyennes **T1, T2** et **T3** régnant dans chacune des zones **9.i** étant proportionnelles aux puissances dissipées, on comprend qu'il soit possible de rétroagir via l'unité **14** de contrôle sur le courant I circulant dans le circuit (respectivement la tension V aux bornes à ses bornes).

On a représenté sur la figure 8 les lois de variation des températures **T1, T2** et **T3** en fonction de l'intensité I du courant (dans le cas d'un circuit en série, figure 6), respectivement de la tension U (dans le cas d'un circuit en parallèle, figure 7).

On voit que le système **6** fonctionne de manière biunivoque, c'est-à-dire qu'à un courant d'intensité $I_0$ (respectivement à une tension $V_0$) donnée correspond un unique triplet de températures **T1, T2, T3** dans les zones **9.i** superposées de la cavité **4,** et réciproquement.

Pour le branchement en série et en parallèle, une seule sonde **16** suffit donc puisque la régulation ne peut pas être conduite séparément pour chaque zone **9.i.** On choisira la valeur de la résistance propre de chaque résistor **8.i** en fonction du profil de température visé, lui-même fonction de l'intensité (pour un montage en série) ou de la tension (pour un montage en parallèle).

On peut monter la sonde **16** dans la coquille **2** au niveau de n'importe laquelle des zones (par exemple la zone **9.1** supérieure). En variante, une caméra thermique peut être montée en sortie du moule **1,** en regard de la cavité **4** ouverte. On régule par exemple la température T1 de la zone supérieure **9.1** de chauffe à une valeur comprise entre 100°C et 160°C, notamment à environ 130°C.

Suivant un mode de réalisation alternatif, illustré de manière schématique sur la figure 9, les résistors **8.i** sont branchés sur des circuits électriques distincts, comprenant chacun un générateur **13** indépendant.

La configuration physique des jeux **7** peut demeurer conforme à la description faite ci-dessus, en référence aux figures 2 à 4 ou 5.

Il est dans ce cas possible de régler et réguler la température de chaque zone **9.i** de manière indépendante, au moyen d'une unité **14** de contrôle reliée à un capteur **16** thermique (tel qu'une sonde montée dans la coquille au droit de chaque zone **9.i,** ou une caméra thermique montée en sortie du moule **1** et balayant l'ensemble des zones **9.i** pour en évaluer la température respective). Selon un mode de réalisation préféré, un gradateur **15** commandé par l'unité **14** de contrôle est monté sur chaque circuit pour faire varier la puissance dissipée par train d'onde.

Il résulte des architectures qui viennent d'être décrites les avantages communs suivants.

Premièrement, il est possible d'effectuer un zonage thermique précis du moule **1,** c'est-à-dire de réguler thermiquement par zones **9.i** superposées la température de chauffe d'un récipient HR au sein du moule **1.**

Deuxièmement, ce zonage peut être réglé de manière précise en fonction de l'intensité circulant dans le circuit électrique du système de chauffe, ou de la tension aux bornes du circuit.

Troisièmement, grâce au montage des éléments **7** de chauffe directement dans la coquille, les fuites thermiques sont minimisées et le rendement énergétique de la chauffe électrique du moule **1** est meilleur.

Quatrièmement, dans le cas de crayons **7** cylindriques, la fabrication de la coquille **2** pour permettre le montage du système de chauffe est relativement simple, puisque de simples trous **10** cylindriques suffisent (respectant cependant de faibles tolérances de dimensionnement, de sorte à maximiser les surfaces de contact effectif entre les crayons et la paroi de la coquille **2**).

## Revendications

1. Moule (**1**) pour le formage par soufflage ou étirage soufflage de récipients de type HR à partir d'ébauches en matière plastique préalablement chauffées, qui comprend une coquille (**2**) délimitant une cavité (**4**) à l'empreinte d'un récipient s'étendant autour d'un axe (**X**) central, et un système (**6**) de chauffe de la coquille (**2**) conçu pour la thermofixation du récipient, **caractérisé en ce que** le système (**6**) de chauffe comprend au moins un jeu (**7**) d'éléments (**8.i**) résistifs distincts, les éléments (8.i) résistifs sont superposés suivant une direction sensiblement parallèle à l'axe (**X**) central, les éléments (8.i) résistifs sont de topologie similaire et chaque élément (8.i) résistif d'un même jeu (**7**) du système (**6**) de chauffe dissipe par effet Joule une énergie thermique différente.

2. Moule (**1**) selon la revendication **1, caractérisé en ce que** les éléments (**8.i**) résistifs d'un même jeu (**7**) présentent des résistances ($R_i$) intrinsèques différentes.

3. Moule (**1**) selon la revendication 1 ou la revendication 2, **caractérisé en ce que** chaque élément (**8.i**) résistif est de forme générale cylindrique, et s'étend sensiblement parallèlement à l'axe (**X**) central.

4. Moule (**1**) selon la revendication 3, **caractérisé en** **ce que** chaque jeu (**7**) d'éléments (**8.i**) résistifs se présente sous forme d'un élément radiant unitaire.

5. Moule (**1**) selon la revendication 4, **caractérisé en ce que** chaque élément (**7**) radiant se présente sous forme d'un crayon cylindrique inséré dans un trou (**10**) complémentaire formé dans la coquille (**2**).

6. Moule (**1**) selon la revendication 2, **caractérisé en ce que** chaque élément (**8.i**) résistif est de forme générale torique de révolution autour de l'axe (**X**) central.

7. Moule (**1**) selon l'une des revendications 1 à 6, **caractérisé en ce que** les éléments (**8.i**) résistifs d'un même jeu (**7**) sont montés en série sur un circuit électrique commun.

8. Moule (**1**) selon l'une des revendications 1 à 6, **caractérisé en ce que** les éléments (**8.i**) résistifs d'un même jeu (**7**) sont montés en parallèle sur un circuit électrique commun.

9. Moule (**1**) selon la revendication 7 ou la revendication 8, **caractérisé en ce que** le circuit électrique est alimenté par un générateur de courant relié à une unité (**16**) de contrôle.

10. Moule (**1**) selon la revendication 9, **caractérisé en ce que** l'unité (**16**) de contrôle est reliée à un capteur thermique tel qu'un thermocouple monté dans le moule, ou une caméra thermique montée en sortie du moule (**1**) et configurée pour effectuer une prise de température au niveau de l'une au moins des zones (**9.i**) de la cavité (**4**) situées au droit des éléments (**8.i**) résistifs.

11. Moule (**1**) selon l'une des revendications 1 à 6, **caractérisé en ce que** chaque élément (**8.i**) résistif est monté sur un circuit électrique indépendant.

12. Unité de formage de récipients à partir de préformes en matière plastique, qui comprend au moins un moule (**1**) selon l'une des revendications 1 à 11.

13. Unité de formage selon la revendication 12, qui comprend une pluralité de moules (**1**) selon l'une des revendications 1 à 11, montés sur un carrousel commun.

## Patentansprüche

1. Form (1) zum Blas- oder Streckblasformen von Behältern der Art HR ausgehend von vorher erwärmten Rohlingen aus Kunststoff, die eine Schale (2), die einen Hohlraum (4) mit dem Abdruck eines Behälters begrenzt, der sich um eine Mittelachse (X) erstreckt, und ein Heizsystem (6) der Schale (2) enthält, das zur Thermofixierung des Behälters konzipiert ist, **dadurch gekennzeichnet, dass** das Heizsystem (6) mindestens einen Satz (7) von unterschiedlichen Widerstandselementen (8.i) enthält, wobei die Widerstandselemente (8.i) in einer Richtung im Wesentlichen parallel zur Mittelachse (X) übereinander angeordnet sind, wobei die Widerstandselemente (8.i) eine ähnliche Topologie haben und jedes Widerstandselement (8.i) eines gleichen Satzes (7) des Heizsystems (6) eine andere Wärmeenergie durch Joule-Effekt ableitet.

2. Form (1) nach Anspruch 1, **dadurch gekennzeichnet, dass** die Widerstandselemente (8.i) eines gleichen Satzes (7) unterschiedliche Eigenwiderstände ($R_i$) aufweisen.

3. Form (1) nach Anspruch 1 oder Anspruch 2, **dadurch gekennzeichnet, dass** jedes Widerstandselement (8.i) eine allgemein zylindrische Form hat und sich im Wesentlichen parallel zur Mittelachse (X) erstreckt.

4. Form (1) nach Anspruch 3, **dadurch gekennzeichnet, dass** jeder Satz (7) von Widerstandselementen (8.i) in Form eines einzigen abstrahlenden Elements vorliegt.

5. Form (1) nach Anspruch 4, **dadurch gekennzeichnet, dass** jedes abstrahlende Element (7) in Form eines zylindrischen Stifts vorliegt, der in ein in der Schale (2) geformtes komplementäres Loch (10) eingeführt wird.

6. Form (1) nach Anspruch 2, **dadurch gekennzeichnet, dass** jedes Widerstandselement (8.i) eine um die Mittelachse (X) drehsymmetrische allgemeine Torusform hat.

7. Form (1) nach einem der Ansprüche 1 bis 6, **dadurch gekennzeichnet, dass** die Widerstandselemente (8.i) eines gleichen Satzes (7) auf einem gemeinsamen Schaltkreis in Reihe geschaltet sind.

8. Form (1) nach einem der Ansprüche 1 bis 6, **dadurch gekennzeichnet, dass** die Widerstandselemente (8.i) eines gleichen Satzes (7) auf einem gemeinsamen Schaltkreis parallelgeschaltet sind.

9. Form (1) nach Anspruch 7 oder Anspruch 8, **dadurch gekennzeichnet, dass** der elektrische Schaltkreis von einem Stromgenerator versorgt wird, der mit einer Steuereinheit (16) verbunden ist.

10. Form (1) nach Anspruch 9, **dadurch gekennzeichnet, dass** die Steuereinheit (16) mit einem Wärmesensor, wie einem in die Form montierten Thermoelement, oder einer Wärmekamera verbunden ist, die am Ausgang der Form (1) montiert und konfiguriert ist, eine Temperaturmessung im Bereich mindestens einer der Zonen (9.i) des Hohlraums (4) auszuführen, die sich vor den Widerstandselementen (8.i) befinden.

11. Form (1) nach einem der Ansprüche 1 bis 6, **dadurch gekennzeichnet, dass** jedes Widerstandselement (8.i) auf einen unabhängigen elektrischen Schaltkreis montiert ist.

12. Einheit zum Formen von Behältern ausgehend von Vorformen aus Kunststoff, die mindestens eine Form (1) nach einem der Ansprüche 1 bis 11 enthält.

13. Formeinheit nach Anspruch 12, die eine Vielzahl von Formen (1) nach einem der Ansprüche 1 bis 11 enthält, die auf ein gemeinsamen Karussell montiert sind.

## Claims

1. Mould (1) for forming HR containers from previously heated preforms made of plastic material by blow-moulding or stretch-blow-moulding, which mould comprises a shell (2) defining a cavity (4) in the shape of a container extending out from a centre axis (X), and a system (6) for heating the shell (2) that is designed for heat-setting the container, **characterized in that** the heating system (6) comprises at least one set (7) of distinctive resistive elements (8.i), the resistive elements (8.i) are superposed along a direction that is substantially parallel to the centre axis (X), the resistive elements (8.i) are similar in topology and each resistive element (8.i) of one and the same set (7) of the heating system (6) dissipates a different thermal energy by Joule effect.

2. Mould (1) according to Claim 1, **characterized in that** the resistive elements (8.i) of one and the same set (7) have different intrinsic resistances ($R_i$).

3. Mould (1) according to Claim 1 or Claim 2, **characterized in that** each resistive element (8.i) is generally cylindrical in shape, and runs substantially parallel to the centre axis (X).

4. Mould (1) according to Claim 3, **characterized in that** each set (7) of resistive elements (8.i) takes the form of a unitary radiant element.

5. Mould (1) according to Claim 4, **characterized in that** each radiant element (7) takes the shape of a cylindrical rod that is inserted into a complementary hole (10) formed in the shell (2).

6. Mould (1) according to Claim 2, **characterized in that** each resistive element (8.i) is generally in the shape of a torus of revolution about the centre axis (X).

7. Mould (1) according to one of Claims 1 to 6, **characterized in that** the resistive elements (8.i) of one and the same set (7) are connected in series to a common electrical circuit.

8. Mould (1) according to one of Claims 1 to 6, **characterized in that** the resistive elements (8.i) of one and the same set (7) are connected in parallel to a common electrical circuit.

9. Mould (1) according to Claim 7 or Claim 8, **characterized in that** the electrical circuit is supplied with power by a current generator that is connected to a control unit (16).

10. Mould (1) according to Claim 9, **characterized in that** the control unit (16) is connected to a heat sensor, such as a thermocouple that is mounted inside the mould or a thermal camera that is mounted at the outlet of the mould (1) and is configured to take a temperature reading at at least one of the zones (9.i) of the cavity (4) that are located in line with the resistive elements (8.i).

11. Mould (1) according to one of Claims 1 to 6, **characterized in that** each resistive element (8.i) is connected to an independent electrical circuit.

12. Unit for forming containers from preforms made of plastic material, which unit comprises at least one mould (1) according to one of Claims 1 to 11.

13. Forming unit according to Claim 12, which unit comprises a plurality of moulds (1) according to one of Claims 1 to 11, mounted on a common mould carrier.

FIG.1

FIG.2

FIG.3

FIG.4

FIG.5

FIG.6

FIG.7

FIG.8

FIG.9

## RÉFÉRENCES CITÉES DANS LA DESCRIPTION

**Documents brevets cités dans la description**

- EP 1753597 A
- WO 2011091780 A
- JP S5789929 B